# FASCICULE DE BREVET EUROPEEN

(11) **EP 2 643 151 B1**
(45) Date de publication et mention de la délivrance du brevet: **17.12.2014**
(21) Numéro de dépôt: 11794553.5
(22) Date de dépôt: 15.11.2011
(51) Int. Cl.: B29C 73/34, H05B 3/36

(54) **PROCÉDÉ DE CHAUFFAGE D'UNE ZONE DE MATERIAU COMPOSITE À RÉPARER**
VERFAHREN ZUM ERWÄRMEN EINES ZU REPARIERENDEN VERBUNDSTOFFBEREICHS
METHOD FOR HEATING A COMPOSITE MATERIAL AREA TO BE REPAIRED

(30) Priorité: 25.11.2010 FR 1059705
(43) Date de publication de la demande: 02.10.2013
(73) Titulaire: Aircelle, 76700 Gonfreville L'Orcher (FR)
(72) Inventeur: ANFRAY, Emmanuel, F-76290 Saint Martin du Manoir (FR); MAZE, Franck, F-76600 Le Havre (FR)
(74) Mandataire: Gaillarde, Frédéric F. Ch.
(86) Numéro de dépôt international: PCT/FR2011/052639
(87) Numéro de publication internationale: WO 2012/069732

(56) Documents cités:
- EP-A1- 1 962 562
- DE-A1-102004 062 064
- FR-A1- 2 537 824

## Description

La présente invention se rapporte au domaine de la réparation des matériaux composites, notamment pour l'aéronautique.

Il convient de pouvoir procéder à la réparation de pièces ou parties de pièces en matériau composite, comme par exemple des structures internes fixes (IFS) de nacelle pour moteur d'avion : ces structures sont en effet sujettes à des dégradations pouvant provenir notamment de surchauffes, d'impacts de projectiles en cours de vol, ou en cours de maintenance (chute d'un outil par exemple).

La réparation de pièces en composites, formées à partir de fibres noyées dans de la résine polymérisée par cuisson, nécessite une élévation de température, située en général aux alentours de 190°C.

Une telle élévation de température permet en effet de fluidifier et de polymériser la résine des plis composites utilisés pour réparer la pièce en question.

Classiquement, pour élever localement la température de la pièce à réparer, on utilise des tapis chauffants, c'est-à-dire des quadrillages de résistances électriques noyées dans des matelas de silicone : cela est enseigné par exemple par la demande de brevet antérieure EP 1 962 562.

On branche ces résistances sur un courant électrique, que l'on régule au moyen d'un ou plusieurs thermocouples disposé(s) à proximité de la zone à chauffer.

En pratique, on constate deux inconvénients principaux : d'une part, il est très difficile d'obtenir une répartition homogène de la température sur toute la surface de la réparation, et d'autre part il faut un temps important pour obtenir une stabilisation des températures en certains points de cette surface.

Des méthodes de réparations alternatives sont décrites dans les documents DE 10 2004 062 064 A1 et FR 2 537 824.

La présente invention a notamment pour but de remédier à ces inconvénients.

On atteint ce but de l'invention avec un procédé de chauffage d'une zone de matériau composite à réparer, dans lequel on place un tapis chauffant principal sur la zone à réparer, ainsi qu'un ou plusieurs tapis chauffants satellites à la périphérie de ce tapis principal et de manière adjacente aux bords de ce tapis principal.

Grâce à cet agencement particulier, on peut compenser les déperditions thermiques à la périphérie du tapis chauffant principal, et ainsi obtenir une stabilisation rapide des températures dans toute la zone de la structure recouverte par le tapis chauffant principal.

De manière préférée, on place au moins un thermocouple sous chacun des tapis principal et satellites, et on régule en permanence et de manière indépendante la puissance électrique fournie à chacun de ces tapis de manière à obtenir l'homogénéité et la rapidité de stabilisation souhaitées pour les températures sur toute l'étendue de la surface couverte par le tapis chauffant principal.

De manière encore plus préférée, on place les thermocouples de régulation des tapis chauffants satellites à proximité de la jonction de ces tapis avec le tapis chauffant principal, et on leur attribue une valeur de consigne permettant d'optimiser la répartition de température sous le tapis chauffant principal.

De manière optionnelle, on peut envisager de placer des plaques conductrices de chaleur à cheval sur la jonction des tapis satellites avec le tapis central, afin d'améliorer l'homogénéisation des températures sous le tapis chauffant principal sous l'effet des tapis satellites.

D'autres caractéristiques et avantages de la présente invention apparaîtront à la lecture de la description qui va suivre et à l'examen des figures ci-annexées, dans lesquelles :
- la figure 1 est une vue en coupe d'un tapis chauffant de la technique antérieure, disposé sur une zone de matériau composite à réparer,
- la figure 2 est une vue de dessus de l'ensemble de la figure 1,
- la figure 3 est un graphique illustrant l'évolution dans le temps des températures mesurées à plusieurs endroits de la structure recouverte par le tapis chauffant des figures 1 et 2,
- la figure 4 est un graphique illustrant la répartition des températures sur la structure par rapport au centre du tapis chauffant des figures 1 et 2,
- les figures 5 à 8 sont des figures respectivement analogues aux figures 1 à 4, pour un procédé selon l'invention mettant en oeuvre d'une part un tapis chauffant principal et d'autre part, des tapis chauffants satellites,
- la figure 9 illustre une disposition particulière de tapis chauffants satellites autour d'un tapis chauffant principal, conformément au procédé selon l'invention et,
- la figure 10 illustre la répartition des températures sur une partie de la structure recouverte par le tapis chauffant principal de la figure 9.

Sur l'ensemble de ces figures, des références identiques ou analogues désignent des organes ou ensembles d'organes identiques ou analogues.

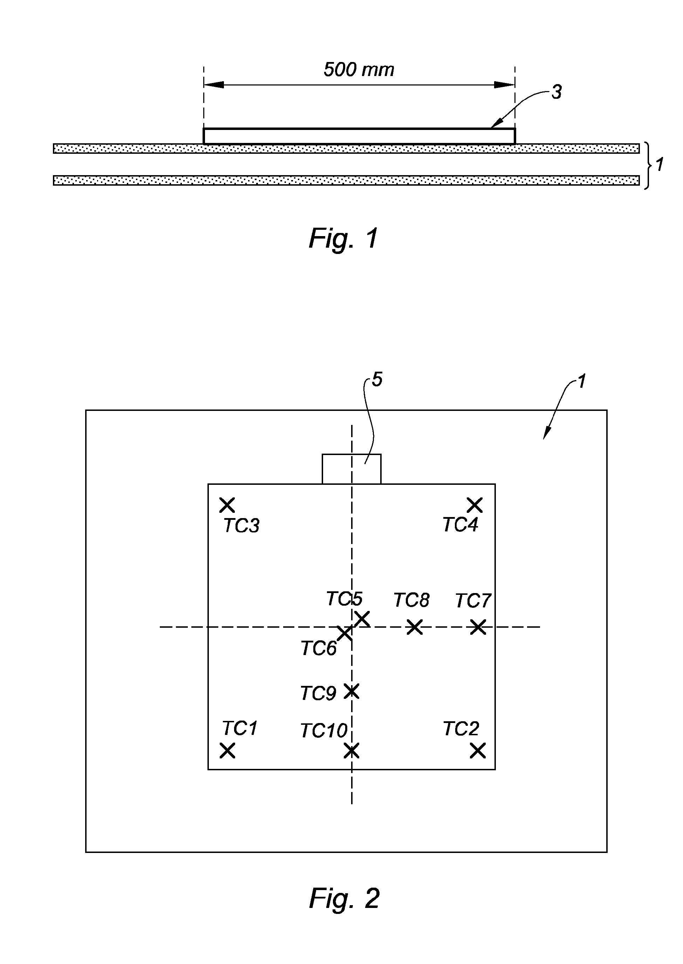

On se reporte à présent aux figures 1 et 2, sur lesquelles on a représenté une pièce antérieure en composite 1 sur laquelle on applique un tapis chauffant 3, dans le but de réaliser une réparation locale de la pièce 1, conformément aux préceptes généraux qui ont été exposés dans le préambule de la présente description.

La pièce en composite 1 est formée de fibres en carbone ou autre matériau, prises dans la masse d'une résine polymérisée.

Le tapis chauffant 3 comporte typiquement un réseau de résistances électriques prises dans la masse d'un matelas en silicone, ce réseau de résistances électriques pouvant être alimenté par une source de courant grâce à un plot de connexion électrique 5.

Un appareillage de commande électronique, non représenté sur les figures ci-jointes, permet d'envoyer sur le plot de connexion 5 un courant dont la puissance est déterminée d'une part, à partir d'une température de consigne pour le tapis chauffant 3 imposée par un opérateur, et d'autre part à partir de valeurs effectives de températures, mesurées par un ou plusieurs thermocouples répartis à proximité de la surface à chauffer.

Comme cela est connu en soi, ces mesures effectives de températures par ces thermocouples permettent, grâce à une ou plusieurs boucles de rétro-action, d'adapter la puissance du courant électrique envoyé sur le plot de connexion 5 par l'appareillage électronique.

Comme indiqué dans le préambule de la présente description, les inconvénients d'un tapis chauffant tel qu'il vient d'être décrit, résident d'une part dans le fait qu'une fois la pente de montée effectuée et la température de palier atteinte et maintenue sur le point de contrôle sélectionné, les autres points de mesure mettent un certain temps à se stabiliser en température, et d'autre part dans le fait qu'une fois cette stabilisation atteinte, on constate une absence d'homogénéité des températures sur la surface de la réparation.

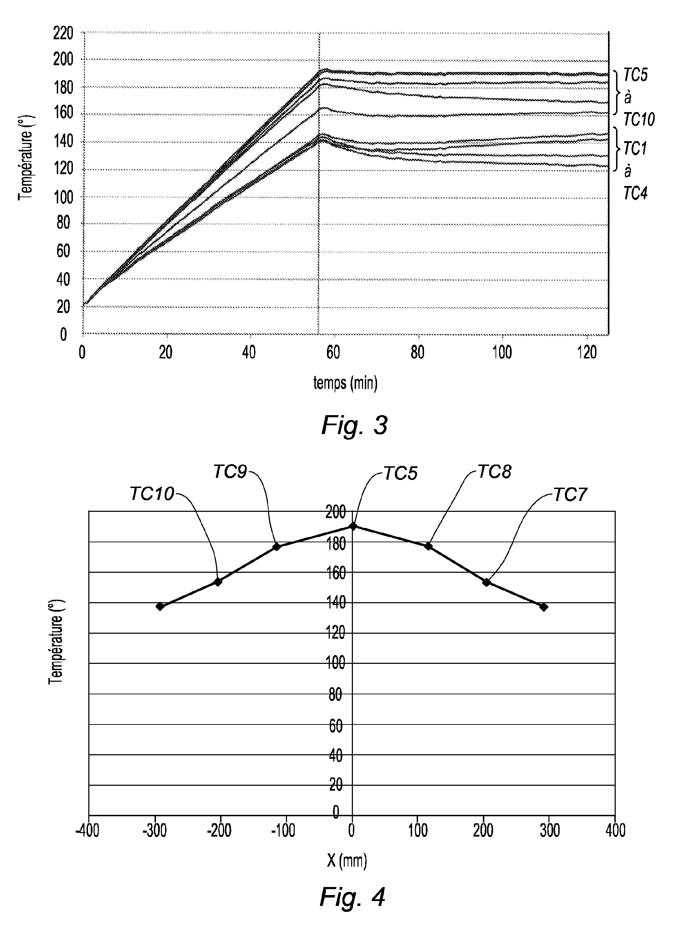

Ceci est illustré notamment à la figure 3, sur laquelle on a représenté les courbes de montée en température du tapis chauffant 3, telles que mesurées par une pluralité de thermocouples TC1 à TC10 répartis comme indiqué à la figure 2 : les thermocouples TC1 à TC4 se trouvent dans les zones de coin du tapis chauffant 3, et les autres thermocouples TC5 à TC10 se trouvent dans la zone plus centrale de ce tapis chauffant.

La figure 3 illustre d'une part le fait que les températures au niveau de certains thermocouples TC1 à TC10 présentent une difficulté à se stabiliser dans les conditions de l'expérience réalisée, même après 60 minutes de palier.

La figure 3 illustre d'autre part le fait qu'une fois stabilisées, les températures présentent une forte disparité dans les différentes zones du tapis chauffant 3 : températures relativement basses (entre 120 et 150° Celsius) dans les zones de coins de ce tapis chauffant (TC1 à TC4), et températures relativement hautes (entre 160 à 195° Celsius) dans la zone plus centrale de ce tapis (TC5 à TC10).

Ceci est corroboré par le graphique de la figure 4, sur lequel on a représenté en abscisse la distance mesurée à partir du centre du tapis chauffant, dont on suppose dans le cadre de la présente discussion qu'il présente une forme sensiblement carrée de 500 mm de côté.

Comme on peut le voir sur cette figure 4, la seule zone où la température correspond sensiblement à la température de consigne souhaitée pour réaliser la réparation du matériel composite, à savoir 190° Celsius, est la zone centrale du tapis chauffant ; cette température va ensuite en décroissant au fur et à mesure que l'on se rapproche des bords de ce tapis chauffant.

Pour remédier à ces inconvénients de lenteur de stabilisation et d'inhomogénéité de répartition des températures, le procédé selon l'invention propose de placer un ou plusieurs tapis chauffants « satellites » à la périphérie du tapis chauffant dit « principal » 3 dans ce qui suit.

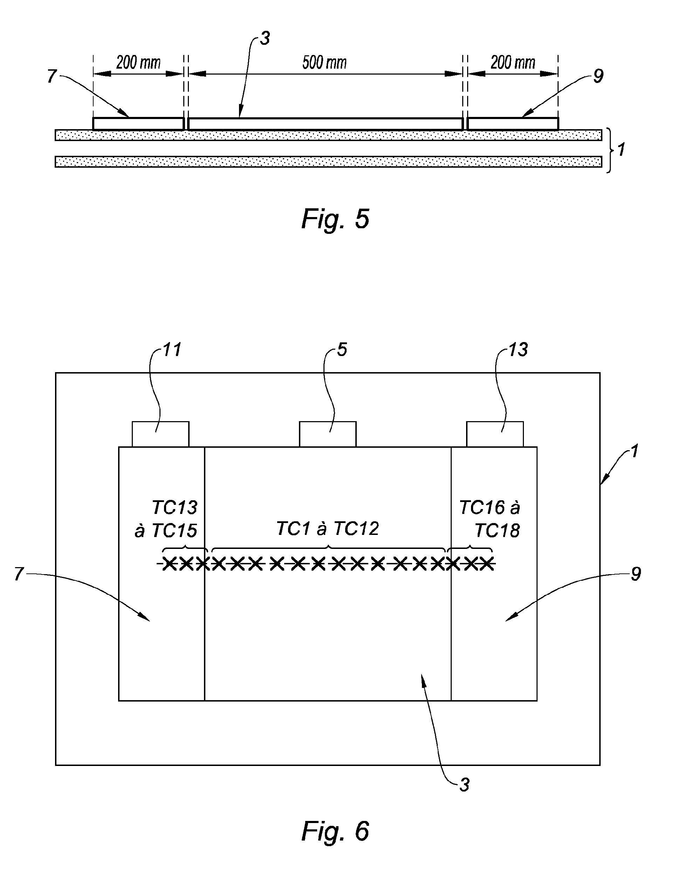

Cela est illustré notamment sur les figures 5 et 6, sur lesquelles on voit que l'on a placé deux tapis chauffants satellites 7 et 9 de part et d'autre du tapis chauffant principal 3, de manière adjacente aux bords de ce tapis chauffant principal.

Les tapis chauffants satellites 7 à 9 sont de même nature que le tapis chauffant principal 3, et comportent ainsi notamment des plots de connexion 11 et 13, permettant d'alimenter électriquement ces tapis chauffants.

A titre indicatif, dans l'hypothèse où le tapis chauffant principal 3 présente la forme d'un carré de 500 mm de côté, on peut envisager que chacun des tapis chauffants satellites 7 et 9 présente sensiblement une forme de rectangle de 500 mm de long et 200 mm de large.

Idéalement, on dispose les thermocouples TC13 à TC18 des tapis chauffants satellites 7 et 9 de manière que ces thermocouples soient à proximité des zones de jonction de ces tapis satellites avec le tapis principal.

On utilise alors d'une part ces thermocouples TC13 à TC18, et d'autre part un ou plusieurs des thermocouples TC1 à TC12 disposés dans une zone centrale du tapis chauffant principal 3 pour commander l'alimentation électrique de l'ensemble de ces tapis au moyen de l'appareillage électronique (non représenté) sur lequel l'opérateur aura fixé une valeur de consigne de température (typiquement 190 ° Celsius, comme indiqué précédemment).

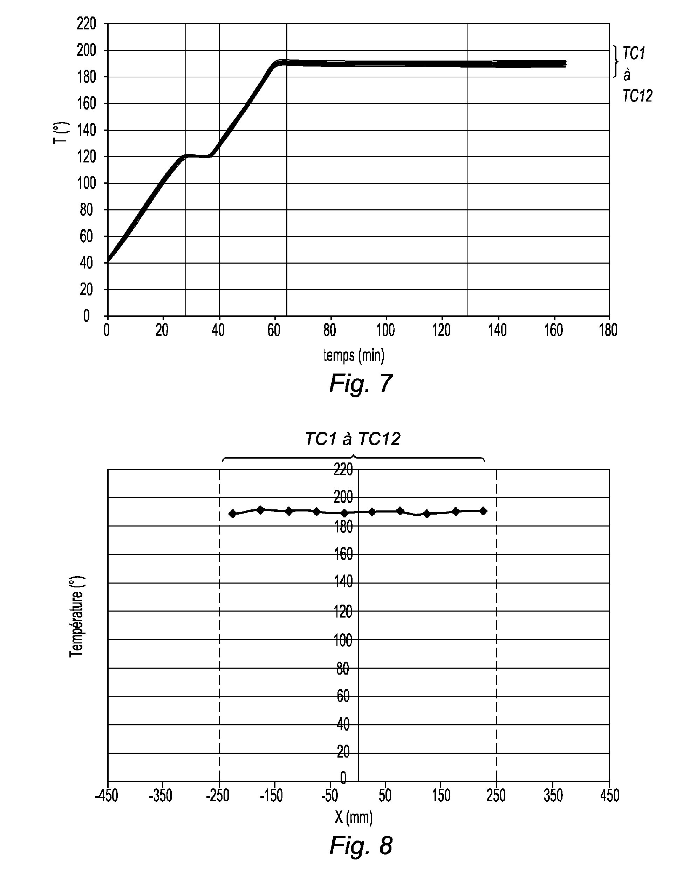

Avec l'agencement particulier qui vient d'être décrit ci-dessus, on obtient, pour des conditions de puissance électrique comparables à celles utilisées pour l'expérience réalisée avec le seul tapis chauffant 3 (figures 1 à 4), une rapide stabilisation de la température du tapis chauffant principal 3, comme cela est visible à la figure 7 : dès l'arrivée au palier de température, les températures mesurées sur la surface recouverte par le tapis central sont stables et n'évoluent quasiment plus.

Comme l'indique en outre le graphique de la figure 7, les thermocouples TC1 à TC12 répartis sur le tapis chauffant principal 3 mettent en évidence une grande homogénéité de températures.

Ceci est confirmé par le graphe de la figure 8, analogue à celui de la figure 4 : au fur et à mesure que l'on s'éloigne du centre du tapis chauffant principal 3, on ne constate pratiquement pas de variation de température.

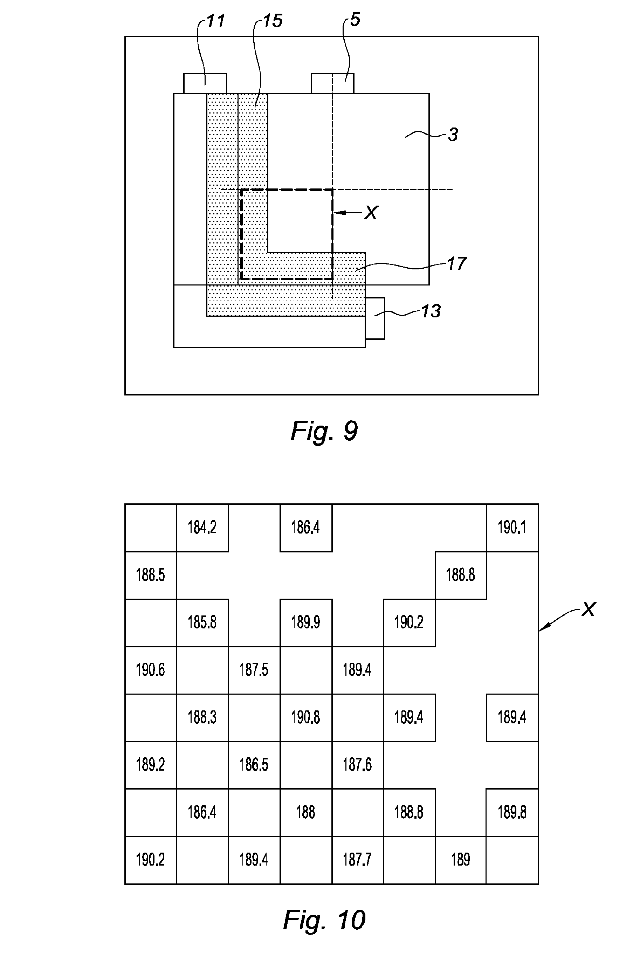

La figure 9 illustre un agencement particulier conforme à l'invention, dans lequel un peut disposer des tapis chauffants satellites 7 et 9 sur deux bords adjacents du tapis chauffant principal 3.

On peut de plus rajouter, dans cet agencement comme dans le précédent, des plaques conductrices 15 et 17, réalisant des ponts thermiques entre les tapis satellites et le tapis principal, et facilitant ainsi une répartition homogène des températures sur la structure chauffée.

La figure 10 illustre les températures mesurées dans la zone X de la figure 9, correspondant au quart inférieur gauche de la surface recouverte par le tapis chauffant principal 3, précisément du côté où les tapis satellites 7, 9 ont été positionnés : on peut constater une très faible variation de ces températures par rapport à la température de consigne de 190° Celsius imposée par l'opérateur au tapis chauffant principal 3.

On notera bien entendu que l'appareillage permettant de piloter les températures des points de pilotage des tapis satellites 7 et 9 et du tapis principal 3 est conçu pour piloter de manière indépendante ces températures : cet appareillage règle en permanence les puissances alimentant les tapis satellites 7 et 9, de manière à réaliser le maintien de la température de consigne aux points de pilotage sélectionnés pour ces tapis.

Comme on peut le comprendre à la lumière de la description qui précède, le procédé selon l'invention permet, avec très peu, voire avec un unique point de mesure de température sur le tapis chauffant principal 3, de compenser en permanence les déperditions de chaleur qui ont lieu dans les zones de bordure de ce tapis principal, et ainsi d'une part d'obtenir une grande rapidité de stabilisation de la température de la zone à réparer sous le tapis principal, et d'autre part une forte homogénéité de ces températures..

On résorbe ainsi de manière très simple les inconvénients attachés à la technique antérieure.

Bien entendu, la présente invention n'est nullement limitée aux modes de réalisation décrits et représentés, fournis à titre de simples exemples.

## Revendications

1. Procédé de chauffage d'une zone de matériau composite (1) à réparer, dans lequel on place un tapis chauffant principal (3) sur la zone à réparer, ainsi qu'un ou plusieurs tapis chauffants satellites (7, 9) à la périphérie de ce tapis principal (3) et de manière adjacente aux bords de ce tapis principal.

2. Procédé selon la revendication 1, dans lequel on place au moins un thermocouple (TC1 à TC18) sous chacun des tapis principal (3) et satellites (7, 9), et on régule en permanence et de manière indépendante la puissance électrique fournie à chacun de ces tapis de manière à obtenir l'homogénéité et la rapidité de stabilisation souhaitées pour les températures sur toute l'étendue de la surface couverte par le tapis chauffant principal (3).

3. Procédé selon la revendication 2, dans lequel on place les thermocouples (TC13 à TC18) de régulation des tapis chauffants satellites (7, 9) à proximité de la jonction de ces tapis avec le tapis chauffant principal (3), et on leur attribue une valeur de consigne permettant d'optimiser la répartition de température sous le tapis chauffant principal (3).

4. Procédé selon l'une quelconque des revendications précédentes, dans lequel on place des plaques conductrices (17) de chaleur à cheval sur la jonction des tapis satellites (7, 9) avec le tapis central (3), afin d'améliorer l'homogénéisation des températures sous le tapis chauffant principal (3) sous l'effet des tapis satellites (7, 9).

## Patentansprüche

1. Verfahren zum Erwärmen eines zu reparierenden Verbundstoffbereichs (1), wobei eine Haupt-Heizmatte (3) auf dem zur reparierenden Bereich angebracht wird, ebenso wie mehrere Satelliten-Heizmatten (7, 9) an der Peripherie dieser Hauptmatte (3) und benachbart zu den Rändern dieser Hauptmatte.

2. Verfahren nach Anspruch 1, wobei mindestens ein Thermoelement (TC1 bis TC18) unter jede der Haupt- (3) und Satelliten-Matten (7, 9) angebracht und ununterbrochen und auf unabhängige Weise die elektrische Leistung geregelt wird, die an jede dieser Matten geliefert wird, um die gewünschte Homogenität und die Schnelligkeit der Stabilisierung für die Temperaturen auf dem gesamten Bereich der Fläche zu erzielen, die von der Haut-Heizmatte (3) bedeckt ist.

3. Verfahren nach Anspruch 2, wobei die Thermoelemente (TC13 bis TC18) zur Regelung der Satelliten-Heizmatten (7, 9) in der Nähe der Verbindung dieser Matten mit der Haupt-Heizmatte (3) angebracht werden und ihnen ein Sollwert zugewiesen wird, der ermöglicht, die Verteilung der Temperatur unter der Haupt-Heizmatte (3) zu optimieren.

4. Verfahren nach einem der vorhergehenden Ansprüche, wobei Wärmeleitplatten (17) rittlings auf der Verbindung der Satelliten-Matten (7, 9) mit der Hauptmatte (3) angebracht werden, um die Homogenisierung der Temperaturen unter der Haupt-Heizmatte (3) unter der Einwirkung der Satelliten-Matten (7, 9) zu verbessern.

## Claims

1. A method for heating an area of composite material (1) to be repaired, wherein one primary heating pad (3) is placed over the area to be repaired, and as well, one or more satellite heating pads (7, 9) are placed around the periphery of this primary heating pad (3) and in a manner such that they are adjacent to the edges of this primary pad.

2. A method according to claim 1, wherein at least one thermocouple (TC1 to TC18) is placed under each of the primary pad (3) and satellite pads (7, 9), and the electric power supplied to each of these pads is controlled on an ongoing basis and in an independent manner in order to obtain the homogeneity and the rapid rate of stabilisation desired for the temperatures over the entire extent of the surface area covered by the primary heating pad (3).

3. A method according to claim 2, wherein the thermocouples (TC13 to TC18) for controlling the satellite heating pads (7, 9) are placed in the proximity of the junction of these pads with the primary heating pad (3), and they are assigned a set point value that enables the optimisation of the temperature distribution under the primary heating pad (3).

4. A method according to any one of the preceding claims, wherein heat conducting plates (17) are placed such that they span across the junction of the satellite pads (7, 9) with the central pad (3), in order to improve the homogenisation of temperatures under the primary heating pad (3) under the effect of the satellite pads (7, 9).
